(19) Europäisches Patentamt
European Patent Office
Office européen des brevets

(11) Veröffentlichungsnummer: **0 010 713**
**A1**

(12) # EUROPÄISCHE PATENTANMELDUNG

(21) Anmeldenummer: **79104079.3**

(22) Anmeldetag: **22.10.79**

(51) Int. Cl.³: **C 02 F 1/72**, C 02 F 11/08, C 02 F 1/52

(30) Priorität: **02.11.78 DE 2847531**

(43) Veröffentlichungstag der Anmeldung: **14.05.80**
**Patentblatt 80/10**

(84) Benannte Vertragsstaaten: **BE CH DE FR GB IT NL**

(71) Anmelder: **BAYER Aktiengesellschaft, Zentralbereich Patente,Marken und Lizenzen Bayerwerk, D-5090 Leverkusen 1 (DE)**

(72) Erfinder: **Feyen, Peter, Dr., Mozartstrasse 1, D-4020 Mettmann (DE)**
Erfinder: **Horak, Otto, Salvatorstrasse 25, D-5000 Koeln 80 (DE)**
Erfinder: **Wunderlich, Hermann, Dr., Arndtstrasse 8, D-5068 Odenthal (DE)**

(54) **Verfahren zur Reinigung von phosphorschwefelorganische Stoffe enthaltenden Abwässern.**

(57) Die vorliegende Erfindung betrifft ein Verfahren zur Reinigung von Abwässern, die phosphorschwefelorganische Verbindungen enthalten, wobei man das Abwasser bei einem Redoxpotential zwischen 300 bis 600 mV, (gemessen mit einer Platineelektrode gegenüber einer Silber-Silberchlorid-Elektrode) bei Temperaturen zwischen 20 und 220°C, bei Sauerstoffpartialdrucken von 1 bis 10 bar in Gegenwart von solchen Mengen Eisen(II)-salz und ggf. Calciumionen oxidiert, dass praktisch der gesamte im Abwasser vorhandene Phosphor in festes Eisen(III)-phosphat überführt wird.

EP 0 010 713 A1

0010713

BAYER AKTIENGESELLSCHAFT 5090 Leverkusen, Bayerwerk
Zentralbereich
Patente, Marken und Lizenzen Je/Bc/AB/Kü

## Verfahren zur Reinigung von phosphorschwefelorganische Stoffe enthaltenden Abwässern

Zur Entfernung von Schadstoffen in Abwässern stehen verschiedene Verfahren zur Verfügung, wie z.B. die biologische Reinigung, die Extraktion, die Adsorption, die Oxidation, die Ultrafiltration oder Umkehrosmose und die Abwasserverbrennung. Dennoch gibt es Stoffe, die mit diesen bekannten Methoden nur unvollständig oder nur sehr kostenintensiv beseitigt werden können. Zu diesen Stoffen zählen auch viele der phosphorschwefelorganischen Verbindungen. Bei der Herstellung dieser Verbindungen, die z.B. als Insektizide Anwendung finden, können Vor-, Neben- oder Endprodukte in Abwasser gelangen. Derartige Abwässer haben in der Regel einen unangenehmen Geruch.

Ziel der vorliegenden Erfindung ist es,ein einfaches Verfahren bereitzustellen, das es erlaubt, diese Schadstoffe aus Abwässern zu entfernen und gleichzeitig eine Geruchsbeseitigung herbeizuführen.

Gegenstand der vorliegenden Erfindung ist ein Verfahren zur Reinigung und Geruchsbeseitigung von Abwässern, die phosphorschwefelorganische Verbindungen enthalten, das dadurch gekennzeichnet ist, daß man das Abwasser bei einem Redoxpotential zwischen 300 bis 600 Millivolt, (gemessen mit einer Platinelektrode gegenüber einer Silber-Silberchlorid-Elektrode) bei Temperaturen zwischen 20 und 220°C bei Sauerstoffpartialdrucken von 1 bis 10 bar in Gegenwart von solchen Mengen Eisen(II)-Salz und ggf. Calciumsalzen oxidiert, daß praktisch der gesamte im Abwasser vorhandene Phosphor in festes Eisen (III)-Phosphat überführt wird.

Es war zwar bereits bekannt, daß einige biologisch nicht oder schwer abbaubare Substanzen mit Hilfe der Naßoxidation oder der Naßverbrennung beseitigt werden können. Um zu vernünftigen Abbauraten zu kommen, ist es dabei in der Regel nötig, relativ hohe Drücke (150 bis 250 bar) und Temperaturen (bis 350°C) anzuwenden. Dadurch entstehen Probleme bei der Auffindung eines geeigneten Materials und energetisch hohe Aufwände. In der Deutschen Offenlegungsschrift 2 559 374 wird aufgeführt, daß bei bestimmten Abwässern mildere Bedingungen möglich sind. Hier handelt es sich um Abwässer, die mit organischen Verbindungen belastet sind, die unter den angegebenen

Bedingungen bis zu CO, $CO_2$ und Wasser oxidiert werden. Ein naßoxidativer Abbau von phosphorschwefelorganischen Verbindungen unter Abtrennung des im Abwasser vorhandenen Phosphorgehalts unter ähnlich milden Bedingungen ist jedoch nicht bekannt.

Nach dem erfindungsgemäßen Verfahren können beispielsweise phosphorschwefelorganische Verbindungen, wie sie durch die folgenden Formeln wiedergegeben werden, oxidiert werden:

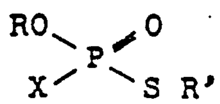 bzw. 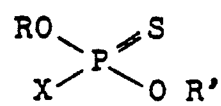 bzw. $(RO)_3\ P{=}O$ ,

wobei

R, R' = H, Alkyl, Aryl oder ein Kation, wie z.B. $NH_4^+$, $Na^+$, $K^+$ und

X = OR, OR', NRR' oder Halogen ist.

Das Abwasser kann daneben Spaltprodukte der in den Formeln wiedergegebenen Verbindungen, Salze, wie Ammoniumchlorid, phosphorige Säure, Mercaptane, Alkohole, organische Lösungsmittelreste, Amine u.a. enthalten.

Nach dem erfindungsgemäßen Verfahren werden die in den Abwässern enthaltenen phosphorschwefelorganischen Verbindungen zunächst naßoxidativ unter milden Bedingungen

oxidativ behandelt. Als Produkte entstehen in der Regel Alkohole, $PO_4^{3-}$-Ionen, $SO_4^{2-}$-Ionen und evtl. andere Salze. Vor oder während der thermischen Behandlung des Abwassers werden dem Abwasser Eisen(II)-Salze, vorzugsweise Eisensulfatheptahydrat in solchen Mindestmengen zugesetzt, daß praktisch der gesamte Phosphorgehalt, der während der Oxidation in Phosphationen überführt wird, als Eisenphosphat ausgefällt wird. Gegebenenfalls können zusätzlich zu dem oder den Eisen(II)-Salzen Calciumionen, in Form von Calciumsalzen zugesetzt werden. Der pH-Wert während der Oxidation sollte unterhalb 4, vorzugsweise zwischen 0,5 und 1,5 liegen. Das Eisen(II)-salzhaltige Abwasser wird in einem Druckbehälter bei einem Redoxpotential zwischen 300 und 600 Millivolt, vorzugsweise zwischen 400 und 500 Millivolt, gemessen an einer Platinelektrode gegenüber einer Silber-Silberchlorid-Elektrode in einem abgekühlten Kontrollstrom bei 20°C bis 50°C, bei Temperaturen zwischen 50 bis 220°C, vorzugsweise zwischen 100 und 150°C, bei einem Sauerstoffpartialdruck zwischen 1 und 10 bar, vorzugsweise 1 bis 5 bar etwa 30 bis 90 Minuten behandelt. Sauerstoff kann in Form von Luft, mit Sauerstoff angereicherter Luft oder vorzugsweise als technisch reiner Sauerstoff eingesetzt werden.

Bei der oxidativen Behandlung entstehendes Eisenphosphat kann abfiltriert werden und in dieser Form deponiert oder für die Herstellung von $P_2O_5$ oder anderer phosphorhaltiger Verbindungen weiterverwendet werden; es kann jedoch auch zunächst im Abwasser verbleiben und nach einer anschließenden biologischen Behandlung des Abwassers zusammen mit dem Bakterienschlamm entfernt werden.

Nach dem erfindungsgemäßen Verfahren kann die Abwasserbehandlung in Behältern, die beispielsweise aus emailliertem Stahl oder Titan bestehen, durchgeführt werden.

Anhand der beiliegenden Figur wird eine bevorzugte Ausführungsform des erfindungsgemäßen Verfahrens näher erläutert:

In dieser Figur kommt den Zahlen folgende Bedeutung zu:

1 Blasensäule
2 Abwasserzulauf
3 Redoxsystem ($FeSO_4 \cdot 7H_2O$)
4 Ablauf oxidiertes Abwasser
5 Abgasleitung
6 Gaszirkulation
7 Zuführung sauerstoffhaltiges Gas
8 Umwälzpumpe
9 Einführung sauerstoffhaltiges Gas
10 Meßstelle für Redoxpotential, Kontrollstrom
11 Zulauf für Säure

Im einzelnen wird das phosphorschwefelorganisch beladene Abwasser der Blasensäule 1 über die Zuführungsleitung 2 am Boden der Blasensäule zugeführt. Sauerstoff, zugeführt über die Leitung 7 und Gasumwälzpumpe 8, wird über die Leitung 9 am Boden der Blasensäule, gegebenenfalls über eine Dispergiervorrichtung (nicht eingezeichnet), eingeleitet. Über die Leitung 3 wird Eisen(II)-Sulfat in solchen Mengen zugeführt, daß die Potentialbestimmung

an der Meßstelle 10 ein Potential im Bereich von 300 bis 600 Millivolt anzeigt und daß der gesamte im Abwasser vorhandene Phosphor in Form von Eisenphosphat ausgefällt wird. Das oxidierte Abwasser verläßt die Blasensäule über die Leitung 4, das entstehende Abgas wird über die Leitung 5 abgeführt. Über die Leitung 6 wird sauerstoffhaltiges Gas rezirkuliert. Der Sauerstoff wird über die Leitung 7 in solchen Mengen zugeführt, daß bezogen auf den chemischen Sauerstoffbedarf des zu behandelnden Abwassers etwa 10 bis 50 % Überschuß vorliegt. Zur Einstellung eines sauren pH-Bereichs im zu behandelnden Abwasser eignen sich anorganische Säuren, wie z.B. Schwefelsäure und Salzsäure; besonders bevorzugt werden schwefelsäurehaltige phosphorschwefelorganische Abwässer verwendet.

Nachfolgend wird das erfindungsgemäße Verfahren beispielhaft erläutert:

Beispiel 1 (Vergleichsbeispiel)

Ein Abwasser, das Phosphate des Typs

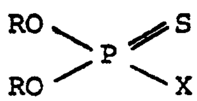

R = Alkyl, H
X = $NH_2$, Halogen, OH, SH

enthielt, hatte einen chemischen Sauerstoffbedarf (CSB) von ca. 40 g/l und war in einer biologischen Kläranlage praktisch nicht abbaubar (biologischer Sauerstoffbedarf = BSB = O).

Der Gehalt an Phosphor in diesem Abwasser betrug 0,4 % (bestimmt als $PO_4^{3-}$ (frei): 0,054 %, (gebunden): 1,18 %).

3 l dieses Abwassers wurden mit $H_2SO_4$ auf pH 1 gestellt und in einen Titanautoklaven eingefüllt. Danach wurde in den Autoklaven Sauerstoff gedrückt, so daß der Sauerstoffpartialdruck $P_{O_2}$ = 3 bar betrug. Unter intensivem Rühren wurde der Inhalt innerhalb 2 Minuten auf 140°C aufgeheizt und 1,5 Stunden bei dieser Temperatur oxidiert. Der Druck im Autoklaven wurde über ein Reduzierventil auf konstant 6 bar gehalten. Während der Oxidation wurden in Zeitabständen Flüssigkeits- und Gasproben entnommen. In den Flüssigkeitsproben wurde das Redoxpotential gemessen, das in diesem Falle im Bereich zwischen 200 bis 350 Millivolt lag. Die Gasproben wurden auf $CO_2$, CO und $H_2S$ untersucht. Während der ersten 15 Minuten (Redoxpotential $< 300$ Millivolt) wurde im Gas $H_2S$ festgestellt. Der Nachweis auf $CO_2$ und CO war negativ.

Nach 1,5 Stunden hatte das Abwasser einen CSB von 16,6 g/l und einen $BSB_5$-Wert von 11,25 g/l (Flaschentest).

Der $PO_4^{3-}$-Gehalt betrug (frei) 0,309 bzw. (gebunden) 0,71 %.

Die Probe war praktisch unverändert unangenehm im Geruch.

## Beispiel 2

Ausführung wie in Beispiel 1, jedoch zusätzlich mit 250 g $FeSO_4 \times 7H_2O$ pro Liter. Das Redoxpotential lag während der Oxidation zwischen 400 und 480 Millivolt. Es wurde kein $CO_2$, CO oder $H_2S$ im Abgas festgestellt.

Nach 1,5 Stunden hatte das Abwasser einen CSB von 16,6 g/l und einen BSB-Wert von 11,1 (5 Tage Flasche).

Der Gehalt an $PO_4^{3-}$ betrug (frei) 0,125 und (gebunden) 0,22 %.

Das Abwasser wies jetzt einen nahezu neutralen Geruch auf.

## Beispiel 3

Es wurde das gleiche Abwasser wie in den Beispielen 1 und 2 verwendet, die Versuchsdurchführung wurde jedoch dahingehend verändert, daß die Temperatur auf 150°C und der Sauerstoffdruck bei 10 bar gehalten wurde.

Danach hatte das Abwasser folgende analytische Daten:

| | |
|---|---|
| CSB: | 16,1 g/l |
| $BSB_5$: | 11,2 g/l |
| $PO_4^{3-}$ (frei): | 0,038 % |
| $PO_4^{3-}$ (gebunden): | 0,08 % |
| Fe: | 0,25 % |

<u>Beispiel 4</u> (Vergleichsbeispiel)

Ein anderes Abwasser mit phosphorschwefelorganischen Bestandteilen der Form

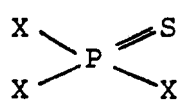 (O) X = OR, Halogen
R = H, Methyl

das bei der Herstellung eines Vorproduktes für ein Pflanzenschutzmittel anfällt, wurde bei gleicher Versuchsdurchführung wie in Beispiel 1 unter folgenden Bedingungen behandelt:

pH-Wert des eingesetzten Abwassers: 1
zugesetzte Menge $FeSO_4 \times 7H_2O$ für 1 l Abwasser: 25 g
Redoxpotential: 400 bis 500 Millivolt
Gesamtdruck: 10 bar
Temperatur: 150°C
Versuchsdauer: 60 Minuten
CSB: 6,28 g/l
BSB: in einer bilogischen Kläranlage praktisch nicht abbaubar
Phosphorgehalt: 0,05 %

Ergebnisse nach der Behandlung:

CSB (direkt): 2,43 g/l

CSB (nach Abdestillieren flüchtiger Bestandteile wie Alkohole): 1,18 g/l

$BSB_5$ (nach Destillation): 0,838 g/l

$PO_4^{3-}$ (frei): 0,018 %

Das Abwasser war praktisch geruchsfrei.

Beispiel 5

Ein Abwasser das phosphorschwefelorganische Verbindungen des Typs

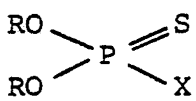 (O)

R = Alkyl, H

X = R, SH, S-Na, S-$NH_4$, SR, OR

enthielt, hatte einen CSB von 64,71 g/l und war ebenfalls biologisch kaum abbaubar. Der Phosphorgehalt betrug 0,9 % (bestimmt als $PO_4^{3-}$ = 2,81 %).

Bei gleicher Versuchsdurchführung wie in Beispiel 1 wurde bei 200°C, 30 bar Druckluft, einem Redoxpotential von 350 bis 500 Millivolt unter Zusatz von 250 g $FeSO_4 \times 7H_2O$ bei pH 1 oxidiert:

Ergebnis:

CSB: 8,6 g/l

$BSB_5$ (Verdünnung 1:1250): 8,6 g/l

$PO_4^{3-}$ (frei): 0,08 %

$PO_4^{3-}$ (gebunden): 0,10 %

Fe: $<$ 0,01 %

Patentansprüche

1) Verfahren zur Reinigung und Geruchsbeseitigung von Abwässern, die phosphorschwefelorganische Verbindungen enthalten, dadurch gekennzeichnet, daß man das Abwasser bei einem Redoxpotential zwischen 300 bis 600 mV, (gemessen mit einer Platinelektrode gegenüber einer Silber-Silberchlorid-Elektrode) bei Temperaturen zwischen 20 und 220°C, bei Sauerstoffpartialdrucken von 1 bis 10 bar in Gegenwart von solchen Mengen Eisen(II)-salz und ggf. Calciumsalzen oxidiert, daß praktisch der gesamte im Abwasser vorhandene Phosphor in festes Eisen (III)-phosphat überführt wird.

2) Verfahren gemäß Anspruch 1, dadurch gekennzeichnet, daß die Oxidation bei pH-Werten zwischen 0,5 und 1,5 durchgeführt wird.

3) Verfahren gemäß einem der Ansprüche 1 bis 2, dadurch gekennzeichnet, daß das oxidierte Abwasser, vorzugsweise nach Abtrennung des Eisenphosphats, einer biologischen Abwasserbehandlung unterzogen wird.

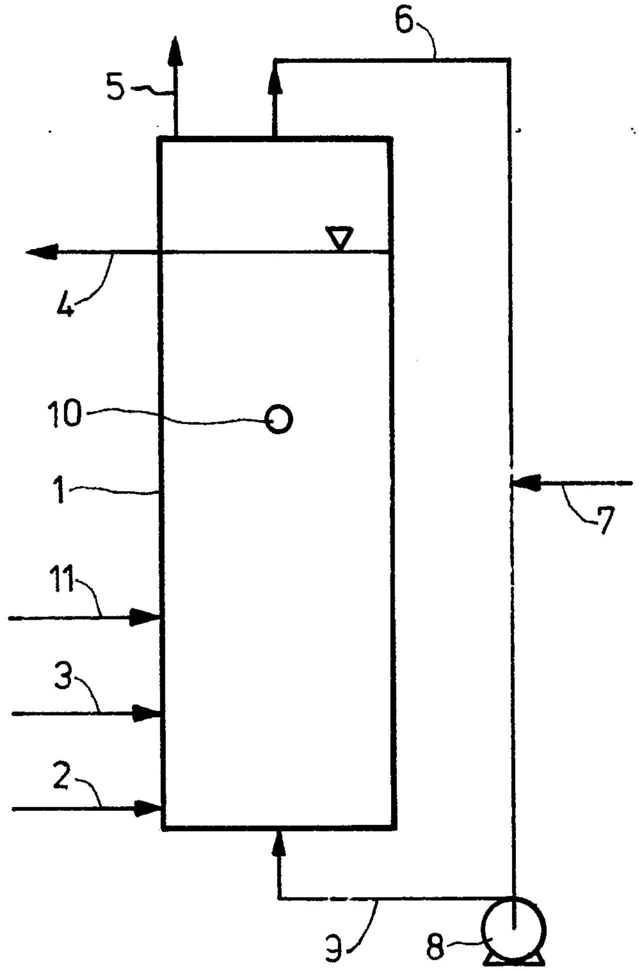

5
6
4
10
1
7
11
3
2
9
8

Europäisches Patentamt

# EUROPÄISCHER RECHERCHENBERICHT

0010713
Nummer der Anmeldung
EP 79 10 4079

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE - A - 2 559 374 (BAYER)<br>* Seite 8, Anspruch 1; Seite 9, Ansprüche 8,10 *<br>-- | 1,2 |
| A | DE - A - 2 657 377 (BAYER) | |
| A | US - A - 3 977 966 (STERLING DRUG) | |
| A | FR - A - 2 177 216 (L'AIR LIQUIDE) | |
| A | US - A - 3 761 409 (D.E. McCOY et al.) | |
| A | GWF WASSER/ABWASSER 116, 1975, Heft 3,<br>München, DE,<br>P. LEUMANN: "Zur Verwendung von Eisenbeize in kommunalen Kläranlagen", Seiten 139-141<br>---- | |

KLASSIFIKATION DER ANMELDUNG (Int.Cl. 3)

C 02 F 1/72
11/08
1/52

RECHERCHIERTE SACHGEBIETE (Int. Cl. 3)

C 02 F 1/72
11/08
D 21 C 11/14

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 31-01-1980 | TEPLY |